# EUROPEAN PATENT APPLICATION

(11) **EP 4 664 669 A1**
(43) Date of publication of application: **17.12.2025**
(21) Application number: 24869650.2
(22) Date of filing: 02.04.2024
(51) Int. Cl.: H01M 50/593, H01M 50/124, H01M 50/103, H01M 50/586

(54) **BATTERY CELL, BATTERY AND ELECTRICAL DEVICE**

(30) Priority: 27.09.2023 CN 202311264181
(71) Applicant: Contemporary Amperex Technology Co., Limited, Ningde, Fujian 352100 (CN)
(72) Inventor: WU, Kai, Ningde, Fujian 352100 (CN); PENG, Longqing, Ningde, Fujian 352100 (CN); LI, Jingli, Ningde, Fujian 352100 (CN); WANG, Rongsheng, Ningde, Fujian 352100 (CN); JI, Xing, Ningde, Fujian 352100 (CN); LI, Ting, Ningde, Fujian 352100 (CN)
(74) Representative: Ziebig Hengelhaupt Intellectual Property Attorneys Patentanwaltskanzlei PartGmbB
(86) International application number: PCT/CN2024/085677
(87) International publication number: WO 2025/066081

(57) **Abstract**

The present application provides a battery cell (20), a battery (100), and an electrical device. The battery cell (20) includes a shell (21), an electrode assembly (22), a first insulating protective layer (23), and a second insulating protective layer (24). The first insulating protective layer (23) is disposed on an inner wall of the shell (21), and the second insulating protective layer (24) is configured to envelop at least a portion of the electrode assembly (22). The battery cell (20) provided in the embodiments of the present application uses the first insulating protective layer (23) and the second insulating protective layer (24) to separate the shell (21) from the electrode assembly (22), thereby increasing the creepage distance between the shell (21) and the electrode assembly (22). This can achieve the purpose of improving the breakdown voltage resistance between the shell (21) and the electrode assembly (22), thereby effectively enhancing the high-voltage breakdown resistance of the shell (21), and consequently reducing the probability of combustion or explosion of the battery cell (20).

## Description

The present application claims priority to Chinese Patent Application No. 202311264181.4 titled "BATTERY CELL, BATTERY, AND ELECTRICAL DEVICE" filed on September 27, 2023, the entire contents of which are incorporated herein by reference.

### TECHNICAL FIELD

The present application relates to the technical field of battery structures, and particularly provides a battery cell, a battery, and an electrical device.

### BACKGROUND

With the development of electronic and intelligent devices, there is an increasingly urgent demand for secondary energy storage batteries, particularly for high-energy-density lithium-ion batteries. In the related art, multiple battery cells are connected in series and then in parallel to form a battery pack. However, the multiple serially connected battery cells generate a high voltage. When one battery cell experiences fusing, a high voltage will be formed between the positive/negative terminal posts in the electrode assembly within the battery cell and the shell, which may cause the shell of the battery cell to undergo lithium plating corrosion breakdown under the high voltage. At the same time, the electrolyte solution will also generate heat through oxidation, which consequently poses a risk of combustion and explosion.

### SUMMARY

Embodiments of the present application aim to provide a battery cell, a battery, and an electrical device, which are intended to resolve the problem of high-voltage breakdown susceptibility of the shell of the battery cell in high-voltage environments in the related art.

To achieve the aforementioned objective, the technical solutions adopted in the embodiments of the present application are as follows:
In a first aspect, an embodiment of the present application provides a battery cell, including a shell, an electrode assembly, a first insulating protective layer, and a second insulating protective layer, where an accommodating cavity is formed within the shell, the electrode assembly is disposed within the accommodating cavity, the first insulating protective layer is disposed on an inner wall of the shell; and the second insulating protective layer is configured to envelop at least a portion of the electrode assembly.

Beneficial effects of the embodiment of the present application: In the battery cell provided in the embodiment of the present application, a first insulating protective layer is disposed on an inner wall of a shell. By disposing the first insulating protective layer, insulating protection is provided for the inner wall of the shell, thereby reducing a probability of contact between the shell and an electrolyte solution within an accommodating cavity. At the same time, a second insulating protective layer is enveloped over at least a portion of an electrode assembly, and by disposing the second insulating protective layer, insulating protection is provided for the electrode assembly. The first insulating protective layer and the second insulating protective layer are used to separate the shell from the electrode assembly, thereby increasing the creepage distance between the shell and the electrode assembly. This can achieve the purpose of improving the breakdown voltage resistance between the shell and the electrode assembly, thereby effectively enhancing the high-voltage breakdown resistance of the shell, and consequently reducing the probability of combustion or explosion of the battery cell.

In some embodiments, on any plane parallel to a height direction of the battery cell, a sum of an orthographic projection of the first insulating protective layer and an orthographic projection of the second insulating protective layer encompasses an orthographic projection of the electrode assembly.

By adopting the aforementioned technical solution, the sum of the orthographic projection of the first insulating protective layer and the orthographic projection of the second insulating protective layer can encompass the orthographic projection of the electrode assembly, meaning that the first insulating protective layer and the second insulating protective layer can jointly function to provide insulating protection. The first insulating protective layer and the second insulating protective layer can completely separate the electrode assembly from the shell, thereby effectively improving the breakdown voltage resistance between the shell and the electrode assembly, so as to improve the high-voltage breakdown resistance of the shell, and consequently reduce the probability of high-voltage breakdown of the shell.

In some embodiments, on any plane parallel to a height direction of the battery cell, an orthographic projection of the first insulating protective layer and an orthographic projection of the second insulating protective layer at least partially overlap.

By adopting the aforementioned technical solution, the orthographic projection of the first insulating protective layer and the orthographic projection of the second insulating protective layer at least partially overlap, which can ensure the separation degree between the shell and the electrode assembly by the first insulating protective layer and the second insulating protective layer, further improving the breakdown voltage resistance between the shell and the electrode assembly, thereby further improving the high-voltage breakdown resistance of the shell.

In some embodiments, the shell includes a case and an end cover, where the case is formed with the accommodating cavity having an opening, and the end cover is disposed to cover the opening; and the first insulating protective layer is disposed on an inner wall of the case, and an avoidance gap is provided between the first insulating protective layer and the end cover.

By adopting the aforementioned technical solution, the end cover is disposed to cover the opening of the case to form sealing, and the avoidance gap is provided between the first insulating protective layer and the end cover to facilitate avoidance of welding between the end cover and the case. On the basis that the first insulating protective layer provides insulating protection for the case, influence of the first insulating protective layer on a connection operation between the case and the end cover is reduced.

In some embodiments, the battery cell further includes a lower plastic layer, the lower plastic layer being disposed on an inner wall of the end cover, where the second insulating protective layer is at least partially connected to the lower plastic layer.

By adopting the aforementioned technical solution, the second insulating protective layer is connected to a lower plastic layer disposed on the inner wall of the end cover. Synchronized insulating protection for the electrode assembly is provided through the lower plastic layer and the second insulating protective layer, thereby effectively improving the insulating protection effect on the electrode assembly. Meanwhile, the second insulating protective layer is connected to the lower plastic layer. During assembly of the end cover and the case, the second insulating protective layer can be directly sleeved and enveloped over at least a portion of the electrode assembly, thereby effectively improving the convenience of assembly.

In some embodiments, on any plane parallel to a height direction of the battery cell, an overlapping height between an orthographic projection of the first insulating protective layer and an orthographic projection of the second insulating protective layer is M, and an inner wall height of the shell is Z, where 0.01Z ≤ M ≤ 0.96Z.

By adopting the aforementioned technical solution, the overlapping height between the orthographic projection of the first insulating protective layer and the orthographic projection of the second insulating protective layer is set to be between 0.01 times and 0.96 times the inner wall height of the shell, which enables the first insulating protective layer and the second insulating protective layer to jointly act between the case and the electrode assembly, thereby improving the breakdown voltage resistance between the case and the electrode assembly and achieving the purpose of enhancing the high-voltage breakdown resistance of the case.

In some embodiments, 0.1Z ≤ M ≤ 0.7Z.

By adopting the aforementioned technical solution, the overlapping height between the orthographic projection of the first insulating protective layer and the orthographic projection of the second insulating protective layer is set to be between 0.1 times and 0.7 times the inner wall height of the shell, which enables the first insulating protective layer and the second insulating protective layer to jointly act between the case and the electrode assembly and improve the breakdown voltage resistance between the shell and the electrode assembly, while relatively reducing the material usage of the first insulating protective layer and the second insulating protective layer, thereby achieving the purpose of cost reduction.

In some embodiments, M ≥ 10 mm.

By adopting the aforementioned technical solution, the overlapping height between the orthographic projection of the first insulating protective layer and the orthographic projection of the second insulating protective layer is set to be greater than or equal to 10 mm, which ensures sufficient overlapping height between the orthographic projection of the first insulating protective layer and the orthographic projection of the second insulating protective layer, thereby enabling the first insulating protective layer and the second insulating protective layer to effectively separate the case from the electrode assembly, so as to achieve the purpose of improving the breakdown voltage resistance between the shell and the electrode assembly.

In some embodiments, a height of the first insulating protective layer is X, and an inner wall height of the shell is Z, where 0.3Z ≤ X ≤ 0.98Z.

By adopting the aforementioned technical solution, the height of the first insulating protective layer is set to be between 0.3 times and 0.98 times the inner wall height of the shell, which enables the first insulating protective layer to provide an insulating protection effect on the inner wall of the shell, thereby effectively enhancing the breakdown voltage resistance between the shell and the electrode assembly.

In some embodiments, 0.5Z ≤ X ≤ 0.9Z.

By adopting the aforementioned technical solution, the height of the first insulating protective layer is set to be between 0.5 times and 0.9 times the inner wall height of the shell, which, on the basis that the first insulating protective layer provides insulating protection for the shell, can enable relatively reduced material usage of the first insulating protective layer, thereby achieving the purpose of cost reduction.

In some embodiments, X < Z - 3 mm.

By adopting the aforementioned technical solution, the height of the first insulating protective layer is set to be 3 mm smaller than the inner wall height of the shell, which enables the first insulating protective layer to fully cover and protect the inner wall of the shell, thereby effectively improving the breakdown voltage resistance between the shell and the electrode assembly and consequently enhancing the high-voltage breakdown resistance of the case.

In some embodiments, a height of the second insulating protective layer is Y, and an inner wall height of the shell is Z, where 0.05Z ≤ Y ≤ 0.98Z.

By adopting the aforementioned technical solution, the height of the second insulating protective layer is set to be between 0.05 times and 0.98 times the inner wall height of the shell, which enables the second insulating protective layer to envelop at least a portion of the electrode assembly, thereby effectively enhancing the breakdown voltage resistance between the shell and the electrode assembly and consequently improving the high-voltage breakdown resistance of the case.

In some embodiments, 0.2Z ≤ Y ≤ 0.8Z.

By adopting the aforementioned technical solution, the height of the second insulating protective layer is set to be between 0.2 times and 0.8 times the inner wall height of the shell, which, on the basis that the second insulating protective layer envelops at least a portion of the electrode assembly, can enable relatively reduced material usage of the second insulating protective layer, thereby achieving the purpose of cost reduction.

In some embodiments, the first insulating protective layer includes at least one of phenolic resin, polyimide, polybenzimidazole, and polyetheretherketone.

By adopting the aforementioned technical solution, the first insulating protective layer may include at least one of phenolic resin, polyimide, polybenzimidazole, and polyetheretherketone, and the first insulating protective layer formed using the aforementioned materials exhibits relatively good insulating protection performance.

In some embodiments, the second insulating protective layer is a thermoplastic polymer layer.

By adopting the aforementioned technical solution, the second insulating protective layer is a thermoplastic polymer layer, which is easy to process and shape while providing superior dimensional stability.

In some embodiments, the second insulating protective layer comprises at least one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate.

By adopting the aforementioned technical solution, the second insulating protective layer may include at least one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate, and the second insulating protective layer formed using the aforementioned materials exhibits relatively good insulating protection performance.

In some embodiments, a thickness of the first insulating protective layer is N, where 1 µm ≤ N ≤ 1000 µm.

By adopting the aforementioned technical solution, the thickness of the first insulating protective layer is set to be greater than or equal to 1 µm and less than 1000 µm, which can enable the first insulating protective layer to have a certain thickness and function to provide insulating protection to the shell, thereby allowing the first insulating protective layer to increase the breakdown voltage resistance between the shell and the electrode assembly, so as to enhance the high-voltage breakdown resistance of the shell.

In some embodiments, the thickness of the first insulating protective layer is N, where 50 µm ≤ N ≤ 500 µm.

By adopting the aforementioned technical solution, the thickness of the first insulating protective layer is set to be greater than or equal to 50 µm and less than 500 µm, which can enable the first insulating protective layer to exhibit relatively good insulating protection performance while maintaining a relatively low space occupancy rate of the first insulating protective layer.

In some embodiments, a thickness of the second insulating protective layer is P, where 10 µm ≤ P ≤ 2000 µm.

By adopting the aforementioned technical solution, the thickness of the second insulating protective layer is set to be greater than or equal to 10 µm and less than 2000 µm, which can enable the second insulating protective layer to have a certain thickness and function to provide insulating protection to the shell, thereby allowing the second insulating protective layer to increase the breakdown voltage resistance between the shell and the electrode assembly, so as to enhance the high-voltage breakdown resistance of the shell.

In some embodiments, the thickness of the second insulating protective layer is P, where 50 µm ≤ P ≤ 500 µm.

By adopting the aforementioned technical solution, the thickness of the second insulating protective layer is set to be greater than or equal to 50 µm and less than 500 µm, which can enable the second insulating protective layer to exhibit relatively good insulating protection performance while maintaining a relatively low space occupancy rate of the second insulating protective layer.

In a second aspect, embodiments of the present application further provide a battery, including the aforementioned battery cell.

Beneficial effects of the embodiment of the present application: The battery provided in the embodiment of the present application includes the aforementioned battery cell. On the basis of relatively good high-voltage breakdown resistance of the case of the battery cell, the probability of combustion or explosion of the battery can be effectively reduced.

In a third aspect, embodiments of the present application further provide an electrical device, including the aforementioned battery.

Beneficial effects of the embodiment of the present application: The electrical device provided in the embodiment of the present application includes the aforementioned battery. On the basis of a relatively low probability of combustion or explosion of the battery, the probability of combustion or explosion of the electrical device is also relatively low.

### DESCRIPTION OF DRAWINGS

To more clearly illustrate the technical solutions in the embodiments of the present application, the drawings required for describing the embodiments or related technologies will be briefly introduced below. It is apparent that the drawings in the following description are only some embodiments of the present application. For those of ordinary skill in the art, other drawings may be obtained from these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded schematic structural diagram of a battery cell provided in some embodiments of the present application;
FIG. 4 is a schematic diagram of the internal structure of a battery cell provided in some embodiments of the present application; and
FIG. 5 is a partial enlarged schematic view at position A in FIG. 4.

Here, the reference numerals in the drawings are as follows:
vehicle 1000;
battery 100, controller 200, motor 300;
box body 10, first portion 11, second portion 12;
battery cell 20, shell 21, accommodating cavity 21a, end cover 211, electrode terminal 211a, case 212, electrode assembly 22, tab 22a, first insulating protective layer 23, avoidance gap 231, second insulating protective layer 24, lower plastic layer 25;
height direction H.

### DETAILED DESCRIPTION

The embodiments of the present application are described in detail below. Examples of the embodiments are illustrated in the accompanying drawings, where the same or similar labels from beginning to end denote the same or similar components or components having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

Battery cells are generally used by connecting in series or in parallel to form battery modules or batteries. During the operation of the battery or battery module, multiple serially connected battery cells generate high voltage. When one battery cell experiences fusing, a high voltage will be formed between the positive/negative terminal posts in the electrode assembly within the battery cell and the case, which may cause the case of the battery cell to undergo lithium plating corrosion breakdown under the high voltage. At the same time, the electrolyte solution will also generate heat through oxidation, which consequently poses a risk of combustion and explosion.

Based on the above considerations, to address the problem of high-voltage breakdown susceptibility of the shell of the battery cell in high-voltage environments, a battery cell is designed. A first insulating protective layer is disposed on an inner wall of a shell. By disposing the first insulating protective layer, insulating protection is provided for the inner wall of the shell, thereby reducing a probability of contact between the shell and an electrolyte solution within an accommodating cavity. At the same time, a second insulating protective layer is enveloped over at least a portion of an electrode assembly, and by disposing the second insulating protective layer, insulating protection is provided for the electrode assembly. The first insulating protective layer and the second insulating protective layer are used to separate the shell from the electrode assembly, thereby increasing the creepage distance between the shell and the electrode assembly. This can achieve the purpose of improving the breakdown voltage resistance between the shell and the electrode assembly, thereby effectively enhancing the high-voltage breakdown resistance of the case, and consequently reducing the probability of combustion or explosion of the battery cell.

The battery cell disclosed in the embodiments of the present application can be used in an electrical device that uses a battery as the power source or in various energy storage systems that use a battery as the energy storage element. The electrical device may be, but is not limited to, a mobile phone, a tablet, a laptop, an electric toy, an electric tool, a battery vehicle, an electric car, a ship, a spacecraft, and the like. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For ease of description, the following embodiments are illustrated by taking an electrical device being a vehicle 1000 in an embodiment of the present application as an example.

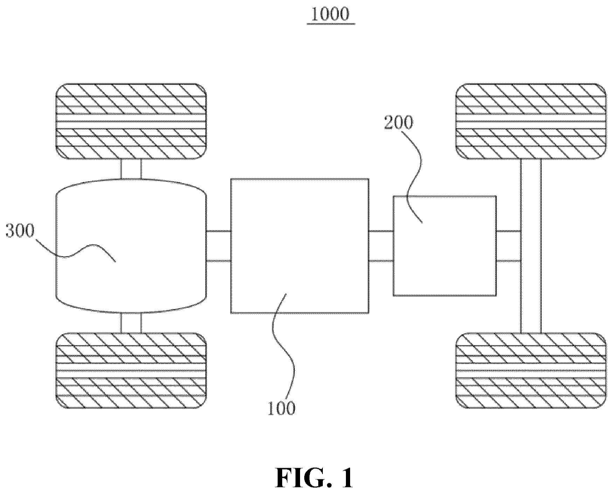

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

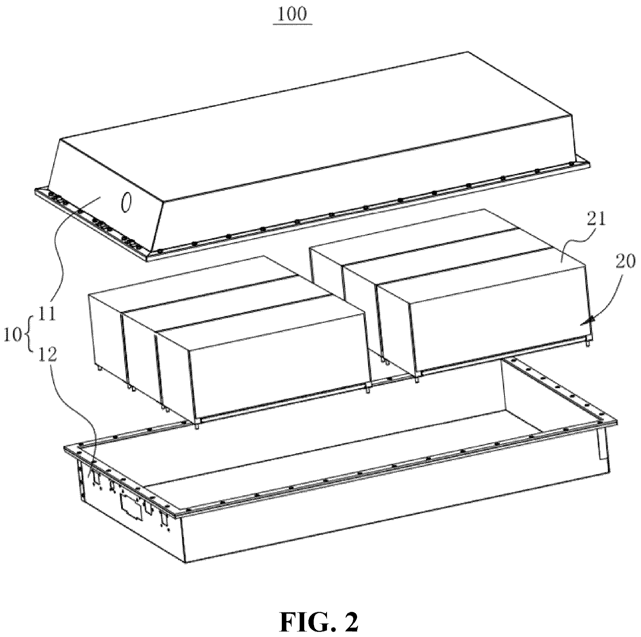

Referring to FIG. 2, FIG. 2 is an exploded view of a battery 100 provided in some embodiments of the present application. The battery 100 comprises a box body 10 and a battery cell 20, wherein the battery cell 20 is accommodated within the box body 10. The box body 10 is used to provide an accommodating space for the battery cell 20, and the box body 10 can be of various structures. In some embodiments, the box body 10 may include a first portion 11 and a second portion 12, the first portion 11 and the second portion 12 covering each other, and the first portion 11 and the second portion 12 together defining the accommodating space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodating space. The first portion 11 and the second portion 12 may each be of a hollow structure with an opening at one end, where the opening side of the first portion 11 covers the opening side of the second portion 12. Of course, the box body 10 formed by the first portion 11 and the second portion 12 may be of a variety of shapes, such as a cylinder and a rectangular solid.

In the battery 100, there may be a plurality of battery cells 20, and the plurality of battery cells 20 may be connected in series or in parallel or in parallel-series, where the parallel-series connection means that the plurality of battery cells 20 are connected in both series and parallel. The plurality of battery cells 20 may be directly connected together in series or in parallel or in parallel-series, and then the whole composed of the plurality of battery cells 20 may be accommodated in the box body 10. Of course, the battery 100 may also be in the form of a battery module first formed by the plurality of battery cells 20 being connected in series or in parallel or in parallel-series, then the plurality of battery modules may be connected in series or in parallel or in parallel-series to form a whole, and accommodated in the box body 10. The battery 100 may further include other structures, for example, the battery 100 may further include a bus component configured to realize electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cell 20 may be in the shape of a cylinder, a flat body, a cuboid or others.

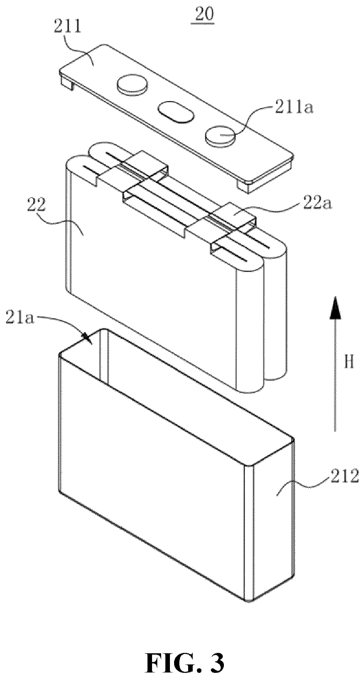

Referring to FIG. 3, and FIG. 3 is a schematic exploded structural diagram of a battery cell 20 provided in some embodiments of the present application. The battery cell 20 refers to a minimum unit that makes up a battery. As shown in FIG. 3, the battery cell 20 includes a shell 21, an electrode assembly 22, and other functional components, where the shell 21 includes an end cover 211 and a case 212.

The end cover 211 is a component that covers an opening of the case 212 to isolate an internal environment of the battery cell 20 from an external environment. Without limitation, the shape of the end cover 211 may be adapted to the shape of the case 212 to fit the case 212. Optionally, the end cover 211 may be made of a material (such as an aluminum alloy) with a certain hardness and strength, so that the end cover 211 is not likely to be deformed when being pressed and collided, the battery cell 20 can have a higher structural strength, and the reliability can also be improved. Functional components such as an electrode terminal 211a may be provided on the end cover 211. The electrode terminal 211a may be configured to electrically connect with the electrode assembly 22 for outputting or inputting electrical energy of the battery cell 20, where the electrode terminal 211a includes a positive terminal post, a negative terminal post, an upper plastic, etc. One end of the positive terminal post and one end of the negative terminal post may be directly connected to a busbar, while the other end of the positive terminal post and the other end of the negative terminal post may be connected to one of the poles of the adjacent battery cell 20 in the battery 100 or the battery module. In some embodiments, the end cover 211 may be further provided with a pressure relief mechanism for relieving internal pressure when the internal pressure or temperature of the battery cell 20 reaches a threshold. The end cover 211 may also be made of a variety of materials. For example, the material of the end cover 211 includes, but is not limited to copper, iron, aluminum, stainless steel, aluminum alloy, etc.

The case 212 is an assembly configured to match the end cover 211 to form the internal environment of the battery cell 20. The formed internal environment may be configured to accommodate the electrode assembly 22, electrolyte solution, and other components. The case 212 and the end cover 211 may be separate components, and an opening may be provided in the case 212, and the internal environment of the battery cell 20 may be formed by making the end cover 211 cover the opening at the opening. Without limitation, the end cover 211 and the case 212 may also be integrated. Specifically, the end cover 211 and the case 212 may form a common connection surface before other components enter the case. When an interior of the case 212 needs to be encapsulated, the case 212 is covered with the end cover 211. The case 212 may be of various shapes and sizes, such as a rectangular solid, a cylinder, and a hexagonal prism. Specifically, the shape of the case 212 may be determined according to the specific shape and size of the electrode assembly 22. The case 212 may also be made of a variety of materials. For example, the material of the case 212 includes but is not limited to copper, iron, aluminum, stainless steel, aluminum alloy, etc.

The electrode assembly 22 is a component in the battery cell 20 where an electrochemical reaction occurs. The case 212 may contain one or more electrode assemblies 22 inside. The electrode assembly 22 is mainly formed by winding or laminating a positive electrode plate and a negative electrode plate, and a separator is usually arranged between the positive electrode plate and the negative electrode plate. The portions of the positive electrode plate and the negative electrode plate having active materials constitute a main body portion of the electrode assembly 22, and the portions of the positive electrode plate and the negative electrode plate having no active materials respectively constitute tabs 22a. The positive electrode tab and the negative electrode tab may be co-located at one end of the main body portion or located at two ends of the main body portion, respectively. In the charging and discharging process of the battery, the positive electrode active material and the negative electrode active material react with electrolyte solution, and the tabs 22a are connected to the electrode terminals to form a current loop.

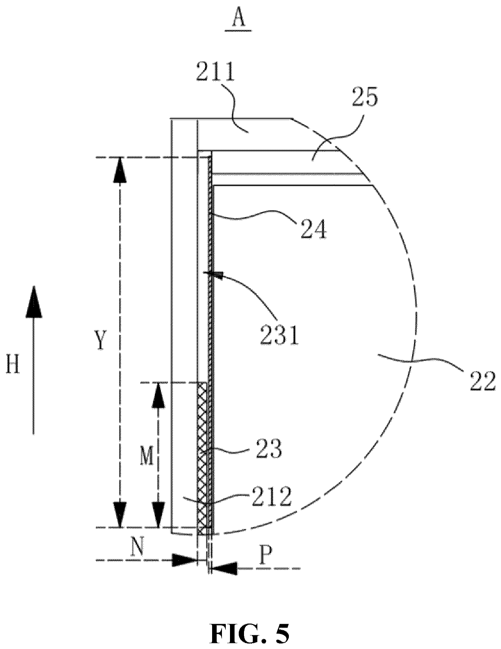

According to some embodiments of the present application, referring to FIGS. 3 to 5, an embodiment of the present application provides a battery cell 20, including a shell 21, an electrode assembly 22, a first insulating protective layer 23, and a second insulating protective layer 24, where an accommodating cavity 21a is formed within the shell 21, the electrode assembly 22 is disposed within the accommodating cavity 21a, the first insulating protective layer 23 is disposed on an inner wall of the shell 21; and the second insulating protective layer 24 is configured to envelop at least a portion of the electrode assembly 22.

It can be understood that the inner wall of the shell 21 refers to the side wall surface of the shell 21 that forms the accommodating cavity 21a. The accommodating cavity 21a is configured to accommodate the electrode assembly 22. The first insulating protective layer 23 is disposed on the inner wall of the shell 21, enabling the first insulating protective layer 23 to function to provide insulating protection for the inner wall of the shell 21 and increase the creepage distance between the shell 21 and the electrode assembly 22.

The first insulating protective layer 23 is an insulating layered structure. The first insulating protective layer 23 may be, but is not limited to, an insulating coating, an insulating film, or an insulating adhesive layer. It may be fixed to the inner wall of the shell 21 through coating, bonding, or other methods. Specifically, the first insulating protective layer 23 may completely cover the inner wall of the shell 21; or, the first insulating protective layer 23 may also cover a portion of the inner wall of the shell 21, leaving another portion of the inner wall of the shell 21 exposed to the first insulating protective layer 23 according to assembly requirements.

The first insulating protective layer 23 is configured to be arranged on the inner wall of the shell 21. Optionally, the first insulating protective layer 23 may completely cover the inner wall of the shell 21, including covering an inner bottom wall, inner side walls, and an inner top wall in the inner wall. Alternatively, the first insulating protective layer 23 may also cover a portion of the inner wall of the shell 21. For example, the first insulating protective layer 23 may cover at least one of the inner bottom wall, the inner side walls, or the inner top wall. Alternatively, the first insulating protective layer 23 may also cover at least a portion of at least one of the inner bottom wall, the inner side walls, or the inner top wall.

The second insulating protective layer 24 is an insulating layered structure. The second insulating protective layer 24 may be, but is not limited to, an insulating coating, an insulating film, or an insulating adhesive layer. It may be wrapped around the electrode assembly 22 through coating, bonding, or other methods, or may be connected to the shell 21 through heat sealing, bonding, or other methods. When assembling the shell 21 and the electrode assembly 22, the second insulating protective layer 24 may be sleeved over at least a portion of the electrode assembly 22. The second insulating protective layer 24 can be used in cooperation with the first insulating protective layer 23 to effectively improve the breakdown voltage resistance between the shell 21 and the electrode assembly 22.

The second insulating protective layer 24 is configured to envelop at least a portion of the electrode assembly 22. Optionally, the second insulating protective layer 24 can envelop a main body portion of the electrode assembly 22. For example, the second insulating protective layer 24 can completely envelop an outer surface of the main body portion of the electrode assembly 22. Alternatively, the second insulating protective layer 24 may envelop only a portion of the outer surface of the main body portion of the electrode assembly 22, while another un-enveloped portion of the main body portion of the electrode assembly 22 may be separated from the inner wall of the shell 21 by the first insulating protective layer 23.

In the battery cell 20 provided in the embodiment of the present application, a first insulating protective layer 23 is disposed on an inner wall of a shell 21. By disposing the first insulating protective layer 23, insulating protection is provided for the inner wall of the shell 21, thereby reducing a probability of contact between the shell 21 and an electrolyte solution within an accommodating cavity 21a. At the same time, a second insulating protective layer 24 is enveloped over at least a portion of an electrode assembly 22, and by disposing the second insulating protective layer 24, insulating protection is provided for the electrode assembly 22. The first insulating protective layer 23 and the second insulating protective layer 24 are used to separate the shell 21 from the electrode assembly 22, thereby increasing the creepage distance between the shell 21 and the electrode assembly 22. This can achieve the purpose of improving the breakdown voltage resistance between the shell 21 and the electrode assembly 22, thereby effectively enhancing the high-voltage breakdown resistance of the case, and consequently reducing the probability of combustion or explosion of the battery cell 20.

According to some embodiments of the present application, referring to FIGS. 3 to 5, on any plane parallel to a height direction H of the battery cell 20, a sum of an orthographic projection of the first insulating protective layer 23 and an orthographic projection of the second insulating protective layer 24 encompasses an orthographic projection of the electrode assembly 22.

The orthographic projection of the first insulating protective layer 23 on any plane parallel to the height direction H of the battery cell 20 refers to a projection of the first insulating protective layer 23 along a direction perpendicular to the height direction H. It can be understood that the height direction H of the battery cell 20 is the height direction of the shell 21. When the shell 21 has a planar-structured side wall, the orthographic projection of the first insulating protective layer 23 on any plane parallel to the height direction H of the battery cell 20 includes a projection on the planar-structured side wall.

Similarly, the orthographic projection of the second insulating protective layer 24 on any plane parallel to the height direction H of the battery cell 20 refers to a projection of the second insulating protective layer 24 along a direction perpendicular to the height direction H. When the shell 21 has a planar-structured side wall, the orthographic projection of the second insulating protective layer 24 on any plane parallel to the height direction H of the battery cell 20 includes a projection on the planar-structured side wall.

The orthographic projection of the electrode assembly 22 on any plane parallel to the height direction H of the battery cell 20 refers to a projection of the electrode assembly 22 along a direction perpendicular to the height direction H. When the shell 21 has a planar-structured side wall, the orthographic projection of the electrode assembly 22 on any plane parallel to the height direction H of the battery cell 20 includes a projection on the planar-structured side wall.

On any plane parallel to the height direction H of the battery cell 20, the sum of the orthographic projection of the first insulating protective layer 23 and the orthographic projection of the second insulating protective layer 24 encompasses the orthographic projection of the electrode assembly 22. That is, the first insulating protective layer 23 and the second insulating protective layer 24 can jointly act between the shell 21 and the electrode assembly 22 along the direction perpendicular to the height direction H of the battery cell 20, such that the first insulating protective layer 23 and the second insulating protective layer 24 can cover the electrode assembly 22 along the direction perpendicular to the height direction H of the battery cell 20. The electrode assembly 22 does not extend beyond the combination of the first insulating protective layer 23 and the second insulating protective layer 24 along the direction perpendicular to the height direction H of the battery cell 20. The shell 21 and the electrode assembly 22 are separated on two opposite sides of the first insulating protective layer 23 and the second insulating protective layer 24, thereby effectively improving the breakdown voltage resistance between the shell 21 and the electrode assembly 22 and consequently effectively enhancing the high-voltage breakdown resistance of the shell 21.

Optionally, for insulating protection measures between the two end portions of the shell 21 and the electrode assembly 22 along the height direction H of the battery cell 20, the first insulating protective layer 23 may envelop two opposing end portions of the inner wall of the shell 21 along the height direction H of the battery cell 20. Alternatively, the second insulating protective layer 24 may envelop the end portions of the electrode assembly 22 along the height direction H of the battery cell 20. Alternatively, other insulating structures may be disposed between the electrode assembly 22 and the inner wall of the shell 21 for insulating protection.

With such a configuration, the sum of the orthographic projection of the first insulating protective layer 23 and the orthographic projection of the second insulating protective layer 24 can encompass the orthographic projection of the electrode assembly 22. That is, the first insulating protective layer 23 and the second insulating protective layer 24 can jointly function to provide insulating protection. The first insulating protective layer 23 and the second insulating protective layer 24 can completely separate the electrode assembly 22 from the shell 21, thereby effectively improving the breakdown voltage resistance between the shell 21 and the electrode assembly 22, so as to improve the high-voltage breakdown resistance of the shell 21, and thus reduce the probability of high-voltage breakdown of the shell 21.

According to some embodiments of the present application, referring to FIGS. 3 to 5, on any plane parallel to the height direction H of the battery cell 20, the orthographic projection of the first insulating protective layer 23 and the orthographic projection of the second insulating protective layer 24 at least partially overlap.

It can be understood that the first insulating protective layer 23 and the second insulating protective layer 24 can jointly function to provide insulating protection along the direction perpendicular to the height direction H of the battery cell 20. The first insulating protective layer 23 and the second insulating protective layer 24 can completely separate the electrode assembly 22 from the shell 21, and at the same time, the first insulating protective layer 23 and the second insulating protective layer 24 at least partially overlap along the direction perpendicular to the height direction H of the battery cell 20. This can ensure that the electrode assembly 22 does not extend beyond the shell 21 along the direction perpendicular to the height direction H of the battery cell 20, thereby further improving the breakdown voltage resistance between the shell 21 and the electrode assembly 22, and thus further enhancing the high-voltage breakdown resistance of the shell 21.

According to some embodiments of the present application, referring to FIGS. 3 to 5, the shell 21 includes a case 212 and an end cover 211, where the case 212 is formed with the accommodating cavity 21a having an opening, and the end cover 211 is disposed to cover the opening; and the first insulating protective layer 23 is disposed on an inner wall of the case 212, and an avoidance gap 231 is provided between the first insulating protective layer 23 and the end cover 211.

Here, the avoidance gap 231 refers to a gap that is formed on the inner wall of the case 212 and between the first insulating protective layer 23 and the end cover 211. The inner wall of the case 212 may be exposed at the avoidance gap 231.

With such a configuration, the end cover 211 is disposed to cover the opening of the case 212 to form sealing, and the avoidance gap 231 is provided between the first insulating protective layer 23 and the end cover 211 to facilitate avoidance of welding between the end cover 211 and the case 212. On the basis that the first insulating protective layer 23 provides insulating protection for the case 212, influence of the first insulating protective layer 23 on a connection operation between the case 212 and the end cover 211 is reduced.

Optionally, specific positions where the first insulating protective layer 23 and the second insulating protective layer 24 are disposed may be as follows: the first insulating protective layer 23 covers the inner wall of the case 212, including the inner bottom wall and inner side walls of the case 212, with the avoidance gap 231 formed on the inner side walls of the case 212 and between the first insulating protective layer 23 and the opening. The second insulating protective layer 24 envelops a main body portion of the electrode assembly 22. For example, the second insulating protective layer 24 may completely envelop the main body portion of the electrode assembly 22, or the second insulating protective layer 24 may partially envelop the main body portion of the electrode assembly 22 at either end along the height direction H of the battery cell 20.

According to some embodiments of the present application, referring to FIGS. 3 to 5, the battery cell 20 further includes a lower plastic layer 25, the lower plastic layer 25 being disposed on an inner wall of the end cover 211, where the second insulating protective layer 24 is at least partially connected to the lower plastic layer 25.

The lower plastic layer 25 is configured to be disposed on the inner wall of the end cover 211 and to provide insulating protection for the inner wall of the end cover 211. The lower plastic layer 25 may be fixed to the inner wall of the end cover 211 through adhesion. It can be understood that the inner wall of the end cover 211 refers to a wall surface of the end cover 211 facing the case 212.

The second insulating protective layer 24 may be partially connected to the lower plastic layer 25, such as through localized connection or spaced connection. Alternatively, the second insulating protective layer 24 may be sealingly connected to the lower plastic layer 25, which means that the second insulating protective layer 24 is continuously and sealingly connected to the lower plastic layer 25. For example, the connection may be achieved in a fully thermally fused and sealed connection manner. Adopting this method to implement sealing connection can further increase the creepage distance between the electrode assembly 22 and the case 212, thereby further improving the high-voltage breakdown resistance of the case 212. Optionally, the connection between the second insulating protective layer 24 and the lower plastic layer 25 may be, but is not limited to, thermally fused fixation or bonding fixation.

It can be understood that the second insulating protective layer 24 is connected to the lower plastic layer 25, meaning that the second insulating protective layer 24 and the end cover 211 are connected via the lower plastic layer 25 to form an integral body. When the end cover 211 is assembled with the case 212, the second insulating protective layer 24 disposed on the end cover 211 can move toward the main body portion of the electrode assembly 22 and be sleeved over the main body portion of the electrode assembly 22, thereby effectively improving assembly convenience. Simultaneously, the first insulating protective layer 23 is disposed on the inner wall of the case 212, and the avoidance gap 231 is formed between the first insulating protective layer 23 and the end cover 211. At this time, the second insulating protective layer 24 can cover the exposed gap in the direction perpendicular to the height direction H of the battery cell 20, effectively improving the breakdown voltage resistance between the case 212 and the electrode assembly 22, thereby enhancing the high-voltage breakdown resistance of the case 212.

According to some embodiments of the present application, referring to FIGS. 3 to 5, on any plane parallel to a height direction H of the battery cell 20, an overlapping height between an orthographic projection of the first insulating protective layer 23 and an orthographic projection of the second insulating protective layer 24 is M, and an inner wall height of the shell 21 is Z, where 0.01Z ≤ M ≤ 0.96Z.

Specifically, Z represents the inner wall height of the shell 21, i.e., a distance from an inner bottom wall to an inner top wall of the shell 21. M represents the overlapping height between the orthographic projection of the first insulating protective layer 23 and the orthographic projection of the second insulating protective layer 24 on any plane parallel to the height direction H of the battery cell 20. In this embodiment, it may be interpreted as a height of an overlapping portion between the orthographic projection of the first insulating protective layer 23 on a side wall of the shell 21 and the orthographic projection of the second insulating protective layer 24 on the side wall of the shell 21.

The range of the overlapping height M is set to be greater than or equal to 0.01 times the inner wall height Z of the shell 21, that is, the orthographic projection of the first insulating protective layer 23 on the side wall of the shell 21 and the orthographic projection of the second insulating protective layer 24 on the side wall of the shell 21 form an overlap, which enables the first insulating protective layer 23 and the second insulating protective layer 24 to jointly protect the shell 21 to improve high-voltage breakdown resistance of the shell 21. At the same time, the range of the overlapping height M is set to be less than or equal to 0.96 times the inner wall height Z of the shell 21, that is, the range of M is limited to between 0.01 times and 0.96 times the inner wall height Z of the shell 21, which enables the first insulating protective layer 23 and the second insulating protective layer 24 to jointly act between the case 212 and the electrode assembly 22 to improve the breakdown voltage resistance between the shell 21 and the electrode assembly 22, thereby achieving the purpose of enhancing the high-voltage breakdown resistance of the case 212.

According to some embodiments of the present application, referring to FIGS. 3 to 5, 0.1Z ≤ M ≤ 0.7Z.

With such a configuration, the overlapping height M between the orthographic projection of the first insulating protective layer 23 and the orthographic projection of the second insulating protective layer 24 on any plane parallel to the height direction H of the battery cell 20 is set to be between 0.1 times and 0.7 times the inner wall height Z of the shell 21, which enables the first insulating protective layer 23 and the second insulating protective layer 24 to jointly act between the case 212 and the electrode assembly 22 and improve the breakdown voltage resistance between the shell 21 and the electrode assembly 22, while relatively reducing the material usage of the first insulating protective layer 23 and the second insulating protective layer 24, thereby achieving the purpose of cost reduction.

According to some embodiments of the present application, referring to FIGS. 3 to 5, M ≥ 10 mm.

With such a configuration, the overlapping height between the orthographic projection of the first insulating protective layer 23 and the orthographic projection of the second insulating protective layer 24 is set to be greater than or equal to 10 mm, which ensures sufficient overlapping height between the orthographic projection of the first insulating protective layer 23 and the orthographic projection of the second insulating protective layer 24, thereby enabling the first insulating protective layer 23 and the second insulating protective layer 24 to effectively separate the case 212 from the electrode assembly 22, so as to achieve the purpose of improving the breakdown voltage resistance between the shell 21 and the electrode assembly 22.

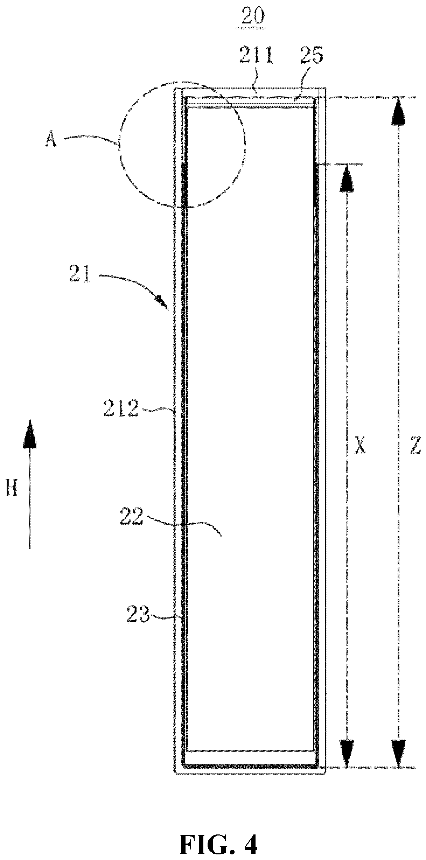

According to some embodiments of the present application, referring to FIGS. 3 and 4, a height of the first insulating protective layer 23 is X, and an inner wall height of the shell 21 is Z, where 0.3Z ≤ X ≤ 0.98Z.

Specifically, X represents the height of the first insulating protective layer 23. The range of the height X of the first insulating protective layer 23 is set to be greater than or equal to 0.03 times the inner wall height Z of the shell 21, that is, the first insulating protective layer 23 can cover at least a portion of the inner wall of the shell 21. At the same time, the range of the height X of the first insulating protective layer 23 is set to be less than or equal to 0.98 times the inner wall height Z of the shell 21, that is, the height of the first insulating protective layer 23 is set to be between 0.3 times and 0.98 times the inner wall height Z of the shell 21, which enables the first insulating protective layer 23 to provide an insulating protection effect on the inner wall of the shell 21, thereby effectively improving the breakdown voltage resistance between the shell 21 and an electrode assembly 22.

According to some embodiments of the present application, referring to FIGS. 3 and 4, 0.5Z ≤ X ≤ 0.9Z.

With such a configuration, the height of the first insulating protective layer 23 is set to be between 0.5 times and 0.9 times the inner wall height of the shell 21, which, on the basis that the first insulating protective layer 23 provides insulating protection for the shell 21, can enable relatively reduced material usage of the first insulating protective layer 23, thereby achieving the purpose of cost reduction.

According to some embodiments of the present application, referring to FIGS. 3 and 4, X < Z - 3 mm.

With such a configuration, the height of the first insulating protective layer 23 is set to be 3 mm less than the inner wall height of the shell 21, which enables the first insulating protective layer 23 to sufficiently cover and protect the inner wall of the shell 21, thereby effectively improving the breakdown voltage resistance between the shell 21 and the electrode assembly 22.

According to some embodiments of the present application, referring to FIGS. 3 to 5, a height of the second insulating protective layer 24 is Y, and an inner wall height of the shell 21 is Z, where 0.05Z ≤ Y ≤ 0.98Z.

Specifically, Y represents the height of the second insulating protective layer 24. The range of the height X of the second insulating protective layer 24 is set to be greater than or equal to 0.05 times the inner wall height Z of the shell 21, that is, the first insulating protective layer 23 can cover at least a portion of the inner wall of the shell 21. At the same time, the range of the height Y of the second insulating protective layer 24 is set to be less than or equal to 0.98 times the inner wall height Z of the shell 21, that is, the height of the second insulating protective layer 24 is set to be between 0.05 times and 0.98 times the inner wall height of the shell 21, which enables the second insulating protective layer 24 to insulatively isolate a main body portion of the electrode assembly 22 and separate the main body portion from the shell 21, thereby effectively improving the breakdown voltage resistance between the shell 21 and the electrode assembly 22, and consequently enhancing high-voltage breakdown resistance of a case 212.

According to some embodiments of the present application, referring to FIGS. 3 to 5, 0.2Z ≤ Y ≤ 0.8Z.

With such a configuration, the height of the second insulating protective layer 24 is set to be between 0.2 times and 0.8 times the inner wall height of the shell 21, which, on the basis that the second insulating protective layer 24 envelops at least a portion of the electrode assembly 22, can enable relatively reduced material usage of the second insulating protective layer 24, thereby achieving the purpose of cost reduction.

According to some embodiments of the present application, referring to FIGS. 3 to 5, the first insulating protective layer 23 includes at least one of phenolic resin, polyimide, polybenzimidazole, and polyetheretherketone.

It can be understood that the first insulating protective layer 23 may include one of phenolic resin, polyimide, polybenzimidazole, and polyetheretherketone; alternatively, the first insulating protective layer 23 may further include multiple of phenolic resin, polyimide, polybenzimidazole, and polyetheretherketone.

With such a configuration, the first insulating protective layer 23 may include at least one of phenolic resin, polyimide, polybenzimidazole, and polyetheretherketone, and the first insulating protective layer 23 formed using the aforementioned materials exhibits relatively good insulating protection performance.

According to some embodiments of the present application, referring to FIGS. 3 to 5, a second insulating protective layer 24 is a thermoplastic polymer layer.

With such a configuration, the second insulating protective layer 24 adopts a thermoplastic polymer layer, which is easy to process and shape while providing superior dimensional stability.

According to some embodiments of the present application, referring to FIGS. 3 to 5, the second insulating protective layer 24 includes at least one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate.

It can be understood that the second insulating protective layer 24 may include one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate; alternatively, the second insulating protective layer 24 may further include multiple of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate.

With such a configuration, the second insulating protective layer 24 may include at least one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate, and the second insulating protective layer 24 formed using the aforementioned materials exhibits relatively good insulating protection performance.

According to some embodiments of the present application, referring to FIGS. 3 to 5, the thickness of the first insulating protective layer 23 is N, where 1 micrometer ≤ N ≤ 1000 micrometers (hereinafter, "µm" is used in place of micrometer).

Specifically, the thickness N of the first insulating protective layer 23 is set to be greater than or equal to 1 µm to ensure that the first insulating protective layer 23 has sufficient thickness to improve the insulating protection performance of the first insulating protective layer 23; at the same time, the thickness N of the first insulating protective layer 23 is set to be less than or equal to 1000 µm, which, while ensuring the first insulating protection performance, controls the thickness N of the first insulating protective layer 23 not to exceed 1000 µm to reduce the space occupied by the first insulating protective layer 23 within the shell 21.

With such a configuration, the thickness of the first insulating protective layer 23 is set to be greater than or equal to 1 µm and less than 1000 µm, which can enable the first insulating protective layer 23 to have a certain thickness and function to provide insulating protection to the shell 21, thereby allowing the first insulating protective layer 23 to increase the breakdown voltage resistance between the shell 21 and the electrode assembly 22, so as to enhance the high-voltage breakdown resistance of the shell 21.

According to some embodiments of the present application, referring to FIGS. 3 to 5, the thickness of the first insulating protective layer 23 is N, where 50 µm ≤ N ≤ 500 µm.

It can be understood that, to further optimize the insulation performance of the first insulating protective layer 23, the thickness N of the first insulating protective layer 23 is set to be greater than or equal to 50 µm; at the same time, to further optimize a space occupancy rate of the first insulating protective layer 23, the thickness N of the first insulating protective layer 23 is set to be less than or equal to 500 µm, which enables the first insulating protective layer 23 to exhibit relatively good insulating protection performance while maintaining a relatively low space occupancy rate of the first insulating protective layer 23.

According to some embodiments of the present application, referring to FIGS. 3 to 5, a thickness of the second insulating protective layer 24 is P, where 10 µm ≤ P ≤ 2000 µm.

Specifically, the thickness P of the second insulating protective layer 24 is set to be greater than or equal to 10 µm to ensure that the second insulating protective layer 24 has sufficient thickness to improve the insulating protection performance of the second insulating protective layer 24; at the same time, the thickness P of the second insulating protective layer 24 is set to be less than or equal to 2000 µm, which, while ensuring the second insulating protective performance, controls the thickness P of the second insulating protective layer 24 not to exceed 2000 µm to reduce the space occupied by the second insulating protective layer 24 within the shell 21.

According to some embodiments of the present application, referring to FIGS. 3 to 5, the thickness of the second insulating protective layer 24 is P, where 50 µm ≤ P ≤ 500 µm.

It can be understood that, to further optimize the insulation performance of the second insulating protective layer 24, the thickness P of the second insulating protective layer 24 is set to be greater than or equal to 50 µm; at the same time, to further optimize the space occupancy rate of the second insulating protective layer 24, the thickness P of the second insulating protective layer 24 is set to be less than or equal to 500 µm, which enables the second insulating protective layer 24 to exhibit relatively good insulating protection performance while maintaining a relatively low space occupancy rate of the second insulating protective layer 24.

For example, in some specific implementations, the battery cell 20 includes a shell 21 and an electrode assembly 22, the shell 21 including a case 212 and an end cover 211 disposed to cover an opening. An inner wall of the case 212 is coated with a first insulating protective coating, where the first insulating protective coating is spaced apart from the end cover 211 disposed to cover the opening to form an avoidance gap 231, the first insulating protective coating can cover most of the inner wall of the case 212, and the inner wall of the case 212 is exposed only at the avoidance gap 231 to facilitate welding assembly operations between the end cover 211 and the case 212. An inner wall of the end cover 211 is coated with a lower plastic layer 25, and at the same time, a second insulating protective film is fully thermally fused and sealingly connected to the lower plastic layer 25, where the second insulating protective film has a tubular structure with one open end, and a sealed end of the second insulating protective film is connected to the lower plastic layer 25. When assembling the end cover 211 and the case 212, the second insulating protective film is sleeved on a main body portion of the electrode assembly 22, such that the second insulating protective film can envelop a portion of the main body portion of the electrode assembly 22. At this time, the first insulating protective coating and the second insulating protective film overlap in a direction perpendicular to a height direction H of the battery cell 20, that is, the first insulating protective coating and the second insulating protective film can jointly provide insulating protection for the case 212 and the electrode assembly 22, separating the case 212 and the electrode assembly 22 on two opposite sides of the first insulating protective coating and the second insulating protective film, thereby effectively improving the breakdown voltage resistance between the case 212 and the electrode assembly 22, and consequently improving high-voltage breakdown resistance of the case 212.

According to some embodiments of the present application, referring to FIGS. 2 to 4, an embodiment of the present application further provides a battery 100, including the battery cell 20 as described above. The battery 100 adopts any battery cell 20 described in the foregoing embodiments, which will not be repeated herein.

According to some embodiments of the present application, continuing to refer to FIGS. 1 and 2, an embodiment of the present application further provides an electrical device, including the battery 100 as described above. The electrical device may be any electrical device described in the foregoing embodiments, for example, a vehicle 1000, which will not be repeated herein.

The foregoing descriptions are merely preferred embodiments of the present application, but are not intended to limit present application. Any modification, equivalent replacement, or improvement made within the spirit and principle of present application shall fall within the protection scope of the present application.

## Claims

1. A battery cell, comprising:
a shell, wherein an accommodating cavity is formed within the shell;
an electrode assembly, the electrode assembly being disposed within the accommodating cavity;
a first insulating protective layer, the first insulating protective layer being disposed on an inner wall of the shell; and
a second insulating protective layer, the second insulating protective layer being configured to envelop at least a portion of the electrode assembly.

2. The battery cell according to claim 1, wherein: on any plane parallel to a height direction of the battery cell, a sum of an orthographic projection of the first insulating protective layer and an orthographic projection of the second insulating protective layer encompasses an orthographic projection of the electrode assembly.

3. The battery cell according to claim 1 or 2, wherein: on any plane parallel to a height direction of the battery cell, an orthographic projection of the first insulating protective layer and an orthographic projection of the second insulating protective layer at least partially overlap.

4. The battery cell according to any one of claims 1 to 3, wherein: the shell comprises a case and an end cover, wherein the case is formed with the accommodating cavity having an opening, and the end cover is disposed to cover the opening; and the first insulating protective layer is disposed on an inner wall of the case, and an avoidance gap is provided between the first insulating protective layer and the end cover.

5. The battery cell according to claim 4, wherein: the battery cell further comprises a lower plastic layer, the lower plastic layer being disposed on an inner wall of the end cover, wherein the second insulating protective layer is at least partially connected to the lower plastic layer.

6. The battery cell according to claim 3, wherein: on any plane parallel to the height direction of the battery cell, an overlapping height between the orthographic projection of the first insulating protective layer and the orthographic projection of the second insulating protective layer is M, and an inner wall height of the shell is Z, wherein 0.01Z ≤ M ≤ 0.96Z.

7. The battery cell according to claim 6, wherein: 0.1Z ≤ M ≤ 0.7Z.

8. The battery cell according to claim 6 or 7, wherein: M ≥ 10 mm.

9. The battery cell according to any one of claims 1 to 8, wherein: a height of the first insulating protective layer is X, and an inner wall height of the shell is Z, wherein 0.3Z ≤ X ≤ 0.98Z.

10. The battery cell according to claim 8, wherein: 0.5Z ≤ X ≤ 0.9Z.

11. The battery cell according to claim 9 or 10, wherein: X < Z - 3 mm.

12. The battery cell according to any one of claims 1 to 11, wherein: a height of the second insulating protective layer is Y, and an inner wall height of the shell is Z, wherein 0.05Z ≤ Y ≤ 0.98Z.

13. The battery cell according to claim 12, wherein: 0.2Z ≤ Y ≤ 0.8Z.

14. The battery cell according to any one of claims 1 to 13, wherein: the first insulating protective layer comprises at least one of phenolic resin, polyimide, polybenzimidazole, and polyetheretherketone.

15. The battery cell according to any one of claims 1 to 14, wherein: the second insulating protective layer is a thermoplastic polymer layer.

16. The battery cell according to claim 15, wherein: the second insulating protective layer comprises at least one of polyethylene, polypropylene, polyurethane, nylon, polyvinylidene fluoride, polystyrene, polymethyl methacrylate, polyvinyl chloride, polycarbonate, polytetrafluoroethylene, and polyethylene terephthalate.

17. The battery cell according to any one of claims 1 to 16, wherein: a thickness of the first insulating protective layer is N, wherein 1 µm ≤ N ≤ 1000 µm.

18. The battery cell according to claim 17, wherein: the thickness of the first insulating protective layer is N, wherein 50 µm ≤ N ≤ 500 µm.

19. The battery cell according to any one of claims 1 to 18, wherein: a thickness of the second insulating protective layer is P, wherein 10 µm ≤ P ≤ 2000 µm.

20. The battery cell according to claim 19, wherein: the thickness of the second insulating protective layer is P, wherein 50 µm ≤ P ≤ 500 µm.

21. A battery, comprising: the battery cell according to any one of claims 1 to 20.

22. An electrical device, comprising: the battery according to claim 21.
